# EUROPÄISCHE PATENTSCHRIFT

(11) **EP 2 073 038 B1**
(45) Veröffentlichungstag und Bekanntmachung des Hinweises auf die Patenterteilung: **02.09.2015**
(21) Anmeldenummer: 08105618.6
(22) Anmeldetag: 21.10.2008
(51) Int. Cl.: G01S 13/93, G01S 15/93, G01S 7/41, G01S 7/539

(54) **Verfahren zur Klassifizierung von Abstandsdaten und korrespondierende Abstandsmessvorrichtung**
Method of classifying distance data and the corresponding distance measuring device
Procédé destiné à la classification de données de distance et dispositif de mesure de distance correspondant

(30) Priorität: 19.12.2007 DE 102007061235
(43) Veröffentlichungstag der Anmeldung: 24.06.2009
(73) Patentinhaber: ROBERT BOSCH GMBH, 70442 Stuttgart (DE)
(72) Erfinder: Niemz, Volker, 71229, Leonberg (DE)

(56) Entgegenhaltungen:
- DE-A1-102005 032 095

## Beschreibung

### TECHNISCHES GEBIET

Die Erfindung betrifft ein Verfahren zur Klassifizierung von Abstandsdaten aus einem Abstandsdetektionssystem, insbesondere aus einer Abstandsmessvorrichtung eines Fahrzeuges zur Lokalisierung von Parklücken und eine korrespondierende Abstandsmessvorrichtung.

### STAND DER TECHNIK

Zur automatisierten Assistenz bei der Führung eines Fahrzeuges sind unterschiedliche Fahrerassistenzsysteme bekannt, die einem Fahrzeuglenker unterschiedliche Informationen über den Straßenzustand, über die geographische Position und über die Fahrzeugumgebung zur Verfügung stellen. Zu Messung des Abstands zu einem benachbarten Fahrzeug beim Einparken sind Einparkhilfen bekannt, die durch akustische und/oder optische Signale dem Fahrer signalisieren, wie groß der zum Rangieren zur Verfügung stehende Raum um das Fahrzeug herum ist.

Die deutsche Offenlegungsschrift DE199 20 090 A1 offenbart eine solche elektronische PKW-Parkhilfe die das Einparken neben dem Bordstein erleichtert und vor dessen Berührung warnt. Hierzu werden die Abstandsdaten aus am Fahrzeug verteilten Echolotsystemen miteinander verglichen und die Position des Fahrzeuges wird aus den relativen Abstandsdaten abgeleitet. Um einen Bordstein zu detektieren, ist ein Sensor vorgesehen, der in die unmittelbare Reifenumgebung auf den Boden zielt.

Die deutsche Offenlegungsschrift DE 10 2005 059 902 A1 offenbart ein Verfahren zur Erfassung eines einzelnen Sensorzustandes aus statistischen Daten des Abstandssensors. Dabei wird aus einer statistischen Analyse einer Reihe von zeitlich benachbarten Abstandsdaten der Zustand eines Sensors eines Abstandsmesssystemes ermittelt. Beispielsweise kann hierdurch festgestellt werden, ob der Sensor durch Alterung eine Abweichung zeigt oder ob dieser durch Schnee bedeckt ist und daher nicht verlässliche Daten ausgibt.

Neben den Einparkhilfen für das eigentliche Einparken sind auch Fahrerassistenzsysteme bekannt, die mit einer Parklückenlokalisierung (PSL) ausgestattet sind und dem Fahrer anzeigen, ob eine in der unmittelbaren Fahrzeugumgebung vorhandene Parklücke groß genug ist, um das Fahrzeug darin parken zu können. Derartige PSL-Systeme benötigen aber zur sicheren Abmessung der zu bemessenden Parklücke Informationen über die in der Umgebung des Fahrzeuges erkannten Objekte. So sind überfahrbare und nicht überfahrbare Objekte voneinander zu unterscheiden, wie beispielsweise ein Bordstein, der überfahrbar ist, oder eine die Parklücke begrenzende Wand, die nicht überfahrbar ist.

Zur Klassifizierung solcher Objekte wäre es möglich, beispielsweise die Daten des Echos eines Ultraschallschwingers auszuwerten, in dem Amplitude, Phase und Abklingverhalten des Echos mit Objekteigenschafen verbunden wird. Diese Systeme erfordern aber umfangreiche Algorithmen und die Daten über Phase, Amplitude und Abklingverhalten stellen gattungsgemäße Abstandsmesssysteme für Fahrzeuge nicht zur Verfügung.

### DARSTELLUNG DER ERFINDUNG

Die Erfindung stellt ein Verfahren zur Klassifizierung von Abstandsdaten zur Verfügung, welches es erlaubt, aus einer Datenreihe zeitlich benachbart gemessener Abstandsdaten, Rückschlüsse auf die Höhe des bemessenen Objektes zu ziehen.

Die Erfindung wird gelöst durch ein Verfahren aufweisend die Merkmale des Anspruches 1. Weitere vorteilhafte Ausgestaltungen des Verfahrens sind in den Unteransprüchen 2 bis 10 gegeben.

Des Weiteren stellt die Erfindung ein zum oben genannten Verfahren korrespondierendes Abstandsmesssystem zur Verfügung, welches die Merkmale in Anspruch 10 aufweist und in den Ansprüchen 11 bis 12 weitergebildet ist.

Die Erfindung basiert darauf, dass größere Objekte, die Messsignale reflektieren, eine weit größere Streuung der Abstandsdaten zwischen zwei Messungen aufweisen als kleinere Objekte diese aufweisen. Dies liegt daran, dass die Messsignale, beispielsweise Ultraschallimpulse oder Mikrowellenimpulse, durch größere Objekte und einem weiteren Objekt, sogar das Fahrzeug selbst, mehrfach reflektiert werden können. Hierdurch können entweder besonders lange Laufzeiten des Messsignals detektiert werden und es ist auch möglich, dass scheinbar besonders kurze Laufzeiten detektiert werden, wenn die Laufzeit des Messsignals durch die Mehrfachreflektion länger dauert als die Zeit zwischen der Aussendung zweier Messsignale zur Abstandsdetektion. In diesem Fall hat der Messsignalgeber das reflektierte Messsignal zeitlich überholt und ein detektiertes Echo wird dem nächsten Messimpuls zugeordnet, wobei die scheinbare Laufzeit dann sehr kurz ausfällt und einen entsprechend kurzen Abstand widerspiegelt.

Kleinere Objekte hingegen zeigen eine kleine Reflektionsfläche und sind daher einer Mehrfachreflektion nicht oder in nur geringem Maße zugänglich, weil die Wahrscheinlichkeit, dass das Messsignal mehrfach die kleine Fläche trifft, gering ist. Des Weiteren ist es wahrscheinlich, dass kleine Objekte auf dem Boden angeordnet sind und nicht frei im Raum vorhanden sind.

Durch eine statistische Analyse vieler zeitlich benachbarter Abstandssignale kann somit auf die Höhe des Objektes geschlossen werden. Die statistische Analyse kann die Berechnung der Standardabweichung oder auch der Varianz umfassen und auch eine Histogrammauswertung, wobei in dem Histogramm die Häufigkeit bestimmter Abstandsdaten ausgewertet wird.

### KURZE BESCHREIBUNG DER ZEICHNUNGEN

Die Erfindung wird anhand der beiliegenden Figuren näher erläutert.

Es zeigt
- Figur 1: ein beispielhaftes Diagramm, in dem Abstandsdaten entlang einer Ortskoordinate abgebildet sind,
- Figur 2: eine Einparksituation mit skizzierter Abstandsdatenerfassung
- Figur 3: ein Blockschaltbild eines erfindungsgemäßen Abstandsmessvorrichtung
- Figur 4: ein Ablaufdiagramm des erfindungsgemäßen Verfahrens.

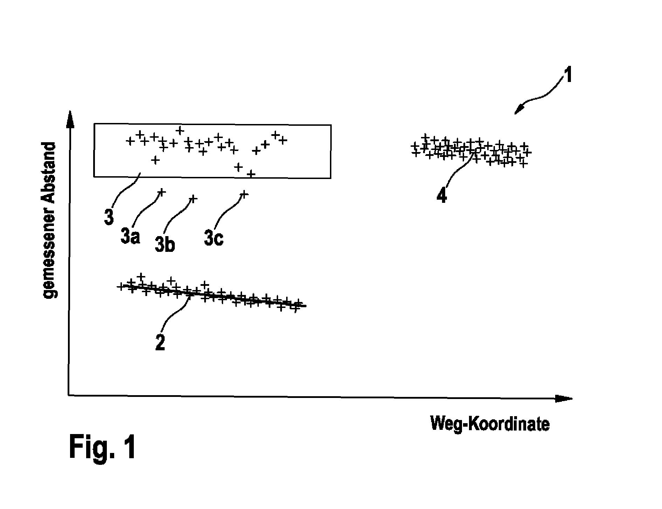

In Figur 1 ist ein beispielhaftes Diagramm 1 dargestellt, in welchem ermittelte Abstandsdaten als Punktwolken 2, 3 und 4 eingezeichnet sind. Das Diagramm 1 bildet aus der Abstandsmessung ermittelte Abstände auf der Abszisse und die Wegkoordinate eines Fahrzeuges auf der Ordinate ab. Die verschiedenen Punktwolken 2, 3 und 4 sind stellvertretend für verschiedene Objekttypen, die durch ein Abstandsmesssystem bemessen wurden. Durch die Punktwolke 2 ist eine Konturlinie gezeichnet, die von einem kleinen länglichen Objekt, beispielsweise von einem Bordstein erzeugt wurde. Im Vergleich zur Konturlinie weichen die gemessenen Abstandsdaten in der Punktwolke 2 im Mittel nur geringfügig von dem tatsächlichen Abstandswert ab. Somit wird durch das erfindungsgemäße Verfahren dieser Punktwolke 2 ein Objekt mit einer geringen Höhe zugeordnet. Die Abstandsdaten in der Punktwolke 3 hingegen variieren stark und scheinen eine Wellenbewegung zu durchlaufen, wobei einige Ausreißer 3a, 3b und 3c besonders niedrige Abstandswerte anzeigen. Diese Ausreißer 3a, 3b und 3c stammen aus Mehrfachreflektionen des Messsignals mit besonders langer Weglänge, wobei die Zeit bis zur Rückkehr zum Detektor am Fahrzeug so lange gedauert hat, dass inzwischen vom Abstandsmesssystem ein weiterer Messimpuls ausgesendet wurde und somit diesem neuen Messimpuls bei der Bestimmung des Abstandes zugeordnet wurde und entsprechend einen sehr kurzen zeitlichen Abstand zum neuen Messimpuls aufweist. Da Mehrfachreflektionen an größeren Objekten wahrscheinlicher sind, wird diese Punktwolke durch das erfindungsgemäße Verfahren einem größeren Objekt zugeordnet. Schließlich stellt Punktwolke 4 das Ergebnis verschiedener Messungen an einem ebenfalls hohen Objekt dar, wobei aber die Intensität der Mehrfachreflektionen geringer ausfällt und daher ist dieses Objekt entweder kleiner als das Objekt, das Punktwolke 2 erzeugt hat, oder die Oberfläche dieses Objektes ist glatter und bietet daher wenig Struktur, in der sich Mehrfachreflektionen ausbilden können.

Im erfindungsgemäßen Verfahren wird optional durch eine vorbestimmte Anzahl von Datenpunkten eine Konturlinie gelegt, relativ zu welcher der Abstand der einzelnen Datenpunkte bestimmt wird. Erst diese Daten werden zur Bestimmung der statistischen Streuung verwendet, um zu vermeiden, dass ein Objekt, das eine im Diagramm schräg liegenden Konturlinie erzeugt, fälschlicherweise eine hohe statistische Streuung zugeordnet wird.

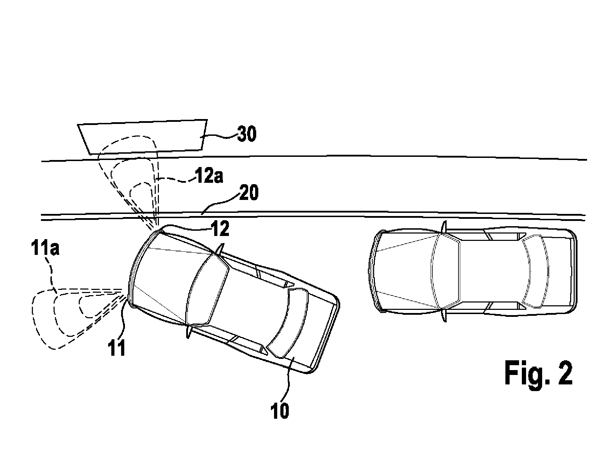

In Figur 2 ist eine Einparksituation für ein Fahrzeug 10 dargestellt, das zwei Abstandssensoren 11 und 12 an der jeweiligen seitlichen Fahrzeugfront aufweist, welche die Messkeulen 11a und 12 a werfen. Die Messkeule 11 a tritt dabei auf kein Objekt, während Messkeule 12a zwei Objekte überstreicht, nämlich eine Bordsteinkehle 20 und eine Wandstruktur, beispielsweise ein Plakat 30. Die beiden Objekte Bordsteinkehle 20 und Plakat 30 führen im Diagramm nach Figur 1 zur Punktwolke 2 (Bordsteinkehle 20) und zur Punktwolke 3 (Plakat 30) durch die oben erläuterten Effekte.

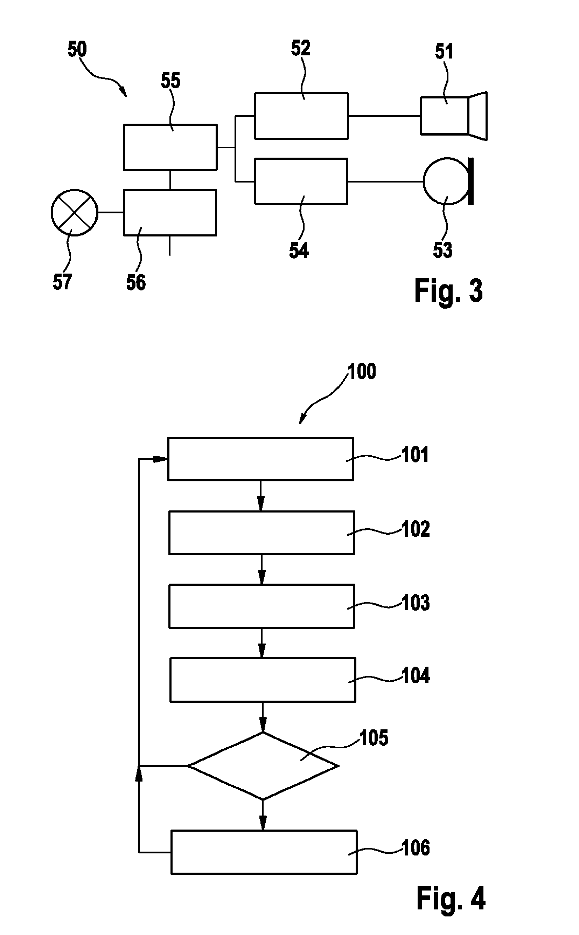

In Figur 3 ist ein Blockschaltbild 50 einer erfindungsgemäßen Abstandsmessvorrichtung für ein Fahrzeug zur Messung des Abstands des Fahrzeugs von in der Fahrzeugumgebung befindlichen Objekten dargestellt. Die Abstandsmessvorrichtung weist eine Einheit zur Erzeugung der Ultraschallimpulse 52 auf und einen Ultraschallgeber 51, der Ultraschallimpulse aussendet, sowie einen Ultraschallempfänger 53 nebst zugehöriger Elektronik 54, der die Ultraschallimpulse nach deren Reflektion von einem Objekt wieder empfängt. Die Zeit zwischen Impuls und Empfang wird in einer Zeitmesseinheit 55 gemessen und zwischengespeichert und nach einer vorbestimmten Anzahl von Messungen wird durch eine weitere Einheit 56 die statistische Streuung ermittelt und einer Höhe zugeordnet, wobei die ermittelte Höhe aus einer intern abgelegten Tabelle oder aus einer Korrelationsfunktion entnommen wird. Eine Warnvorrichtung 57 erzeugt ein Warnsignal, sofern ein hohes, nicht überfahrbares Objekt in der Nähe des Fahrzeuges detektiert wird, wobei die Warnvorrichtung vorzugsweise eine optische Anzeige und/oder eine akustische Warnvorrichtung ist.

In Figur 4 ist schließlich ein Ablaufdiagramm 100 eines erfindungsgemäßen Verfahrens zur Klassifizierung von Abstandsdaten aus eines Abstandsdetektionssystem dargestellt. Das erfindungsgemäße Verfahren beginnt mit der Erzeugung und Aussendung eines Messsignals, bevorzugt in Form eines Ultraschallimpulses in Schritt 101, dem Schritt 102 folgt, in dem der ausgesendete Ultraschallimpuls wieder empfangen wird. Die Zeit zwischen Aussendung des Ultraschallimpulses und dem Empfang wird in Schritt 103 durchgeführt und in Schritt 104 wird der gemessene Abstand zwischengespeichert und bei Erreichen einer vorbestimmten Anzahl von Datenpunkten, was durch Zählen der Datenpunkte und Entscheidung, ob die Anzahl bereits gemessen wurde, in Schritt 105 durchgeführt wird, wird die statistische Analyse der in Schritt 104 vorgehaltenen Datenpunkte in Schritt 106 durchgeführt. Wenn die Anzahl der Datenpunkte für eine statistische Analyse noch nicht erreicht wurde, dann kehrt das Verfahren bereits in Schritt 105 wieder zum Anfangspunkt zurück, bis die vorbestimmte Anzahl von Datenpunkten gemessen wurde, so dass die nächste statistische Analyse durchgeführt wird. Dabei kann die statistische Analyse mit einzelnen Datenpaketen oder gleitend durchgeführt werden, wobei erstmalig bei Erreichen der Mindestanzahl Datenpunkte eine statistische Analyse durchgeführt wird und darauf folgend wird mit jedem einzelnen Datenpunkt unter Aufgabe eines weiter zurückliegend gemessenen Datenpunktes die statistische Analyse wiederholt.

## Patentansprüche

1. Verfahren zur Klassifizierung von Abstandsdaten eines Abstandsdetektionssystems, insbesondere aus einem Afastandsdetektionssystem eines Fahrzeuges zur Lokalisierung von Parklücken, mit Schritten des Aussendens von Messsignalen, Empfangen von an entfernten Objekten reflektierten Messsignalen durch einen Sensor, Ermitteln von Zeiten zwischen Aussendung und Empfang der Messsignale und Korrelation der Zeiten zwischen Aussendung und Empfang der Messsignale mit daraus ermittelten Abstandsdaten und Korrelieren von statistischer Streuung der Abstandsdaten mit ermittelter zugehöriger Höhe eines reflektierenden Objektes.

2. Verfahren nach Anspruch 1, wobei als Messsignale Ultraschall oder Mikrowellen verwendet werden.

3. Verfahren nach Anspruch 1 oder 2, wobei die Zeit zwischen zwei Messungen variiert wird.

4. Verfahren nach einem der Ansprüche 1 bis 3, wobei die Frequenz des ausgesendeten Messsignals variiert wird.

5. Verfahren nach einem der Ansprüche 1 bis 4, wobei die Korrelation der statistischen Streuung der Abstandsdaten mit der Höhe des Objekts über die Standardabweichung und/oder die Varianz vorgenommen wird.

6. Verfahren nach Anspruch 5, wobei eine ermittelte Standardabweichung über eine Tabelle und/oder über eine Korrelationsfunktion einer Objekthöhe zugeordnet wird.

7. Verfahren nach einem der Ansprüche 1 bis 6, wobei bei Überschreitung einer vorbestimmten Standardabweichung, die Zeit zwischen zwei Messungen erhöht wird.

8. Verfahren nach einem der Ansprüche 1 bis 7, wobei das Ergebnis der Klassifizierung in hohe und niedrige Objekte zur Aktivierung einer Warnfunktion verwendet wird, wobei niedrige Objekte keine Warnfunktion auslösen und hohe Objekte eine Warnfunktion auslösen.

9. Verfahren nach einem der Ansprüche 1 bis 8, wobei das Ergebnis der Klassifikation mit weiteren Daten zur Klassifizierung von Parkraumdaten verknüpft wird.

10. Verfahren nach Anspruch 9, wobei die Korrelation eine Ermittlung der Konturlinie umfasst, die aus Bewegungsdaten des Fahrzeuges und den gemessenen Abstandsdaten erzeugt wird und die statistische Streuung relativ zur Konturlinie ermittelt wird.

11. Abstandsmessvorrichtung für ein Fahrzeug zur Messung eines Abstands des Fahrzeugs von in einer Fahrzeugumgebung befindlichen Objekten, mit einer Einheit zur Erzeugung und Aussendung von Messsignalen, einem Sensor zum Empfangen von an entfernten Objekten reflektierten Messsignalen, einer Einheit zum Ermitteln von Zeiten zwischen Aussendung und Empfang der Messsignale und zur Korrelation der Zeiten mit einem daraus ermittelten Abstand sowie einer Einheit zur Objekthöhenermittlung, welche statistische Streuung der Abstandsdaten mit ermittelter zugehöriger Höhe eines reflektierenden Objektes korreliert.

12. Abstandsmessvorrichtung nach Anspruch 11, welches eine Warnvorrichtung aufweist, die ab einer vorgegebenen, nach Korrelation ermittelten Höhe, einen Warnsignal, bevorzugt ein akustisches und/oder ein optisches Warnsignal ausgibt.

13. Abstandsmessvorrichtung nach einem der Ansprüche 11 oder 12, welche die Zeit zwischen zwei Messungen variiert.

## Claims

1. Method for classifying distance data of a distance detection system, in particular from a distance detection system of a vehicle in order to locate parking spaces, comprising the steps of emitting measurement signals, using a sensor to receive measurement signals reflected on distant objects, determining times between emission and reception of the measurement signals, and correlating times between emission and reception of the measurement signals with distance data determined therefrom, and correlating statistical scatter of the distance data with determined associated heights of a reflecting object.

2. Method according to Claim 1, in which ultrasound or microwaves are used as measurement signals.

3. Method according to Claim 1 or 2, in which the time between two measurements is varied.

4. Method according to one of Claims 1 to 3, in which the frequency of the emitted measurement signal is varied.

5. Method according to one of Claims 1 to 4, in which the correlation of the statistical scatter of the distance data with the height of the object is undertaken via the standard deviation and/or the variance.

6. Method according to Claim 5, in which a determined standard deviation is assigned an object height via a table and/or via a correlation function.

7. Method according to one of Claims 1 to 6, in which the time between two measurements in the event of a predetermined standard deviation being exceeded is increased.

8. Method according to one of Claims 1 to 7, in which the result of the classification into high and low objects is used to activate a warning function, low objects not triggering a warning function, and high objects triggering a warning function.

9. Method according to one of Claims 1 to 8, in which the result of the classification is linked to further data for classifying parking space data.

10. Method according to Claim 9, in which the correlation comprises a determination of the contour line which is generated from movement data of the vehicle and the measured distance data, and the statistical scatter relative to the contour line is determined

11. Distance measuring device for a vehicle for the purpose of measuring a distance of the vehicle from objects present in an environment of the vehicle, comprising a unit for generating and emitting measurement signals, a sensor for receiving measurement signals reflected on distant objects, a unit for determining times between emission and reception of the measurement signals and for correlating the times with a distance determined therefrom, and a unit for determining the object heights which correlates statistical scatter of the distance data with determined associated heights of a reflecting object.

12. Distance measuring device according to Claim 11, which has a warning device which, starting from a prescribed height determined by correlation, emits a warning signal, preferably an acoustic and/or an optical warning signal.

13. Distance measuring device according to either of Claims 11 and 12, which varies the time between two measurements.

## Revendications

1. Procédé pour la classification de données de distance d'un système de détection de distance, en particulier issues d'un système de détection de distance d'un véhicule pour la localisation de créneaux de stationnement, avec les étapes d'émission de signaux de mesure, de réception de signaux de mesure réfléchis au niveau d'objets éloignés grâce à un capteur, de détermination de durées entre l'émission et la réception des signaux de mesure, et de mise en corrélation des durées entre l'émission et la réception des signaux de mesure avec des données de distance déterminées à partir de cela, et de mise en corrélation de la dispersion statistique des données de distance avec une hauteur associée déterminée d'un objet réfléchissant.

2. Procédé selon la revendication 1, dans lequel on utilise, en guise de signaux de mesure, des ultrasons ou des micro-ondes.

3. Procédé selon la revendication 1 ou 2, dans lequel on fait varier la durée entre deux mesures.

4. Procédé selon l'une des revendications 1 à 3, dans lequel on fait varier la fréquence du signal de mesure émis.

5. Procédé selon l'une des revendications 1 à 4, dans lequel la corrélation entre la dispersion statistique des données de distance et la hauteur de l'objet est effectuée via l'écart type et/ou la variance.

6. Procédé selon la revendication 5, dans lequel un écart type déterminé est associé, via un tableau et/ou via une fonction de corrélation, à une hauteur d'objet.

7. Procédé selon l'une des revendications 1 à 6, dans lequel, en cas de dépassement par le haut d'un écart type prédéterminé, on augmente la durée entre deux mesures.

8. Procédé selon l'une des revendications 1 à 7, dans lequel le résultat de la classification en objets hauts et bas est utilisé pour l'activation d'une fonction d'avertissement, dans lequel des objets bas ne déclenchent pas de fonction d'avertissement et des objets hauts déclenchent une fonction d'avertissement.

9. Procédé selon l'une des revendications 1 à 8, dans lequel le résultat de la classification est mis en lien avec d'autres données pour la classification de données d'espaces de stationnement.

10. Procédé selon la revendication 9, dans lequel la corrélation comprend une détermination de la ligne de contour, laquelle est générée d'après des données de déplacement du véhicule et les données de distance mesurées, et la dispersion statistique par rapport à la ligne de contour est déterminée.

11. Dispositif de mesure de distance pour un véhicule afin de mesurer une distance du véhicule par rapport à des objets se trouvant dans l'environnement du véhicule, avec une unité pour la génération et l'émission de signaux de mesure, un capteur pour la réception de signaux de mesure réfléchis au niveau d'objets éloignés, une unité pour la détermination de durées entre l'émission et la réception des signaux de mesure et pour la mise en corrélation des durées avec une distance déterminée à partir de cela, ainsi qu'une unité pour la détermination de la hauteur d'un objet, laquelle effectue la corrélation entre la dispersion statistique des données de distance et la hauteur associée déterminée d'un objet réfléchissant.

12. Dispositif de mesure de distance selon la revendication 11, lequel présente un dispositif d'avertissement lequel, à partir d'une hauteur prescrite déterminée d'après une corrélation, émet un signal d'avertissement, de préférence un signal d'avertissement acoustique et/ou optique.

13. Dispositif de mesure de distance selon l'une des revendications 11 ou 12, lequel fait varier la durée entre deux mesures.
